# EUROPÄISCHE PATENTANMELDUNG

(11) **EP 0 791 598 A2**
(43) Veröffentlichungstag der Anmeldung: **27.08.1997**
(21) Anmeldenummer: 97102559.8
(22) Anmeldetag: 18.02.1997
(51) Int. Cl.: C07F 7/08, C07F 7/18

(54) **Alkylalkoxysilyl-1,3-oxazoline, ein Verfahren zur Herstellung und Verwendung**

(30) Priorität: 21.02.1996 DE 19606413
(71) Anmelder: Degussa Aktiengesellschaft, 60311 Frankfurt (DE)
(72) Erfinder: Münzenberg, Jörg, Dr., 63457 Hanau (DE); Mülhaupt, Rolf, Prof. Dr., 79117 Freiburg (DE); Müller, Philipp, 79194 Gundelfingen (DE)

(57) **Zusammenfassung**

Gegenstand der Erfindung sind Alkylalkoxysilyl-1,3-oxazoline, deren Herstellung durch Umsetzung von 2[-Alkenyl]-1,3-oxazolinen mit Alkylalkoxysilanen oder Cyanoalkylensilanverbindungen mit Amminoalkoholen und die Verwendung der erfindungsgemäßen Verbindungen zur Modifizierung von Materialien mit silikatischen Oberflächen.

## Beschreibung

Die Erfindung betrifft Alkylalkoxysilyl-1,3-oxazoline, ein Verfahren zur Herstellung und Verwendung.

Die erfindungsgemäßen Verbindungen besitzen die allgemeine Formel 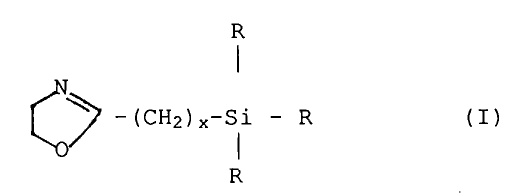 in der bedeuten
- R:: Alkyl mit 1 bis 6 C-Atomen, verzweigt oder unverzweigt, Alkoxy mit 1 bis 4 C-Atomen,
Phenyl, wobei Si durch mindestens eine Alkoxygruppe substituiert ist,
- x:: eine ganze Zahl zwischen 2 und 14.

Gegenstand der Erfindung ist ebenso ein Verfahren zur Herstellung der Alkoxysilyl-oxazoline gemäß Anspruch 1, dadurch gekennzeichnet, daß man ein 2-[Alkenyl]-1,3-oxazolin der allgemeinen Formel 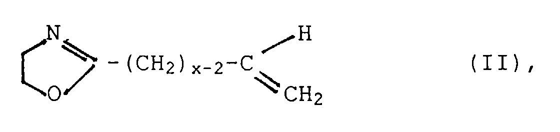 in der x die Bedeutung wie oben besitzt,
in Gegenwart Pt- oder Rhodiumkatalysators mit einem Alkylalkoxysilan der allgemeinen Formel 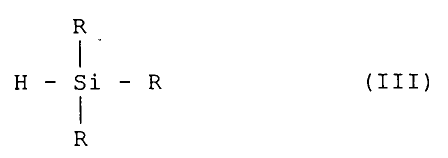 umsetzt, in der R dieselben Bedeutungen wie oben hat.

Bevorzugt verwendet man das Triethoxy- bzw. das Trimethoxysilan.

Die Umsetzung erfolgt bei Temperaturen von 80 bis 140°C, gegebenenfalls unter dem sich durch den Dampfdruck der Reaktanten bzw. Lösungsmittel bei diesen Temperaturen einstellenden Druck, gegebenenfalls unter Schutzgas.

Im allgemeinen setzt man die jeweilige Oxazolinausgangsverbindung als Lösungsmittel ein. Es ist jedoch ebenso möglich, unter Verwendung von organischen, die Reaktanten lösenden inerten Lösungsmitteln zu arbeiten.

Das Alkenyl-1,3-oxazolin und das einzusetzende Silan werden in einem Molverhältnis von 1 : 1 bis 2,0 : 1, insbesondere 1,2 : 1 bis 1,7 : 1, eingesetzt.

Die Hydrosilylierungskatalysatoren sind aus dem Stand der Technik bekannt. Geeignet sind die Hexachloroplatinsäure oder Koordinationskomplexe wie zum Beispiel RhCl(PPh₃)₃, gegebenenfalls in Anwesenheit peroxidischer Verbindungen.

In einer weiteren Verfahrensvariante stellt man die erfindungsgemäßen Verbindungen durch ein Verfahren her, das dadurch gekennzeichnet ist, daß man eine Cyanosilanverbindung der allgemeinen Formel 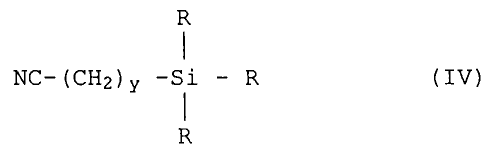 in der R die Bedeutung wie oben hat und y eine ganze Zahl von 2 bis 12 bedeutet, mit 2-Aminoethanol in Gegenwart eines als Katalysator wirkenden Cd-Salzes umsetzt, gegebenenfalls unter Schutzgas.

Die Umsetzung erfolgt im allgemeinen bei einer Temperatur zwischen 60 und 140°C, gegebenenfalls unter dem sich bei diesen Temperaturen durch den Dampfdruck der Bestandteile des Reaktionsgemisches entstehenden Druck. Die Cyanosilanverbindung und der 2-Aminoethanol werden im allgemeinen in einem Molverhältnis von 1,2 : 1 bis 1 : 1,2 eingesetzt. Als Katalysator finden lösliche Cadmiumsalze in einer Molmenge von 0,1 bis 3 %, bezogen auf die eingesetzte Cyanosilanverbindung, Verwendung. Als Lösungsmittel wählt man eine inerte organische Verbindung, insbesondere Alkohole mit 1 bis 4 C-Atomen, verzweigt oder unverzweigt. Dabei ist natürlich im Hinblick auf die Gefahr der Umesterung auf eine Gleichartigkeit im Hinblick auf die Substituenten in Formel IV zu achten.

Die erfindungsgemäßen Verbindungen finden Verwendung bei der Modifizierung von silikatischen Oberflächen. Darunter sind zu verstehen zum Beispiel Oberflächen von Glasfasern, Glaskugeln aber auch gefällte Kieselsäuren mit einer spezifischen Oberfläche von 5 bis 800 m²/g oder pyrogen gewonnene Kieselsäuren mit entsprechend hohen Oberflächen, wie sie zur Verstärkung von Kunststoffen bekannt sind. Verfahren zur Modifizierung von silikatischen Oberflächen können aus dem Stand der Technik übernommen werden. Üblich zum Beispiel bei Glasfasern ist das Tauchen dieser Materialien in den entsprechenden Lösungen der Organosilanverbindungen, das Besprühen mit einer Lösung oder dem reinen Produkt.

Bei den feinteiligen Füllstoffen hat sich auch das Besprühen des Pulvers bei gleichzeitigem intensiven Mischen bewährt.

Die Konzentrationen der eingesetzten Silyl-1,3-oxazoline bewegen sich zwischen 0,01 und 15 Gew.-Teilen, bezogen auf das zu modifizierende Material.

Die Reaktion mit den an der Oberfläche dieser Materialien befindlichen OH-Gruppen läuft zum Beispiel nach dem folgenden Schema ab:

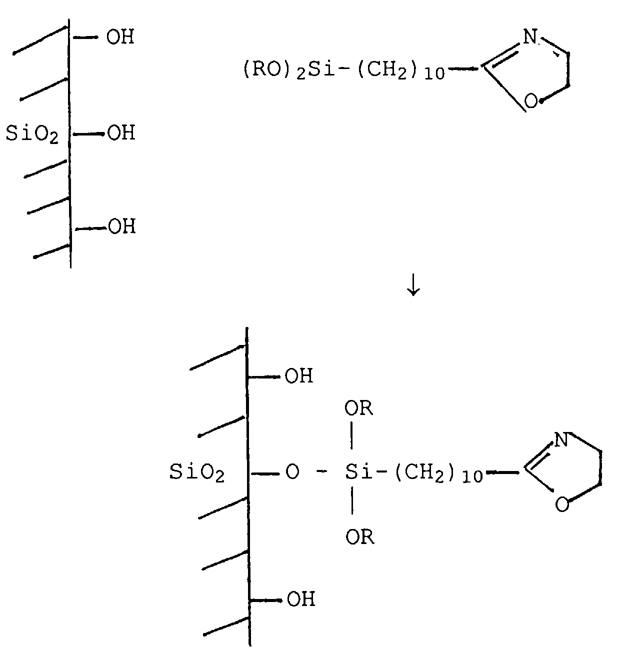

Vorzugsweise läuft diese Reaktion unter alkalischer Katalyse ab, das heißt in Gegenwart von zum Beispiel im System löslichen Ammoniumverbindungen oder weiteren Aminen.

Die erfindungsgemäß modifizierten Glasfasern, Glaskugeln, Kieselsäuren etc. werden in bevorzugt Doppelbindungen enthaltenden Kunststoffen eingesetzt, wie zum Beispiel Polypropylen. Insbesondere geeignet sind carboxylierte Typen, bei denen man beispielsweise folgenden Ankoppelungsmechanismus beobachtet:

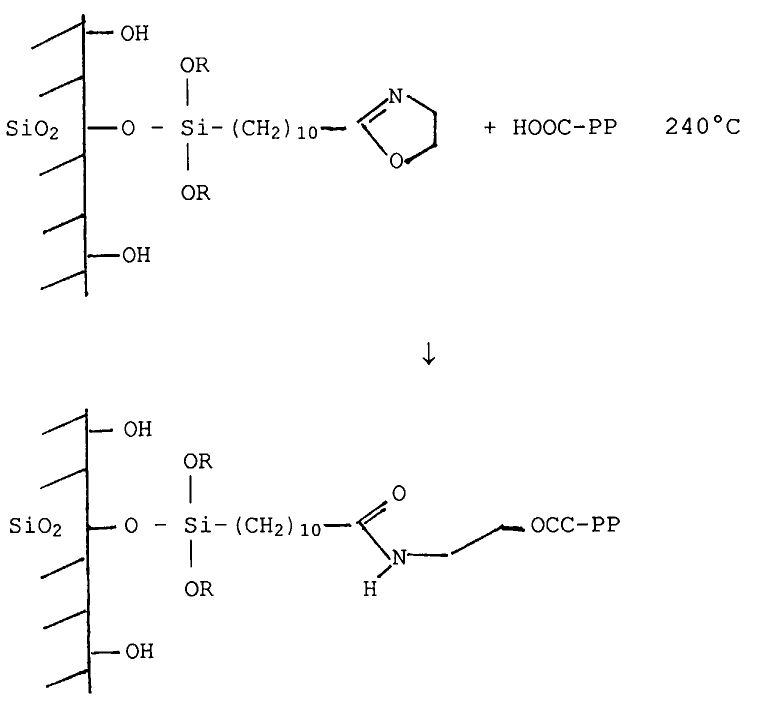

Setzt man mit den erfindungsgemäßen Verbindungen modifizierte Glaskugeln zum Beispiel in carboxyliertem Propylen ein, wird die theoretisch maximal mögliche Zugspannung der nicht gefüllten Matrix erreicht. Mit Octylsilan behandelte Materialien weisen demgegenüber eine wesentlich verringerte Zugspannung auf.

### 1. Synthese der Alkylalkoxysilyl-oxazoline

Herstellung von 2-[10-(Triethoxysilyl)decyl]-1,3-oxazolin

Herstellung von 2-[10-(Trimethoxysilyl)decyl]-1,3-oxazolin 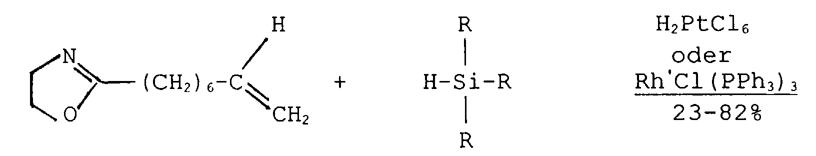
- 2a: R = Et
- 2b: R = n.-Hexyl
- 2c: R = Ph
- 2d: R = Ome
- 2e: R = Oet

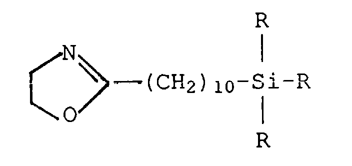

- 3a: R = Et
- 3b: R = n-Hexyl
- 3c: R = Ph
- 3d: R = Ome
- 3e: R = Oet

### 1.1 Beispiel 1

Herstellung von 2-[10-(Triethoxysilyl)deoyl]-1,3-oxazolin.

In einem Rundkolben mit Innenthermometer und Einleitungsrohr für Schutzgas wurde eine Mischung aus
34,3 g (0,163 mol) 2-(9-Decenyl)-1,3-oxazolin,
17,9 g (0,109 mol) Triethoxysilan,
0,2 g (0,22 mmol) Rh¹Cl(PPh₃)₃,
0,29 ml (0,87 mmol) t-Butylhydroperoxid (3M Lösung in Toluol) für 1 h auf 100°C erhitzt. Die fraktionierte Vakuumdestillation des Ansatzes ergab 33,5 g (82 % d. Th.) 2-[10-(Triethoxysilyl)decyl)-1,3-oxazolin bei Sdp. 148 - 150°C (0,1 mbar).
FTIR (Kbr): ν = 2920, 1669 (C=N), 1105, 950 (Oxazolin) cm⁻¹.
¹H NMR(Mhz,CDCl₃: δ=0.63 (2H,t,*J* =7.9 Hz), 1.21 (23H,m),1.64 (2H,m),
2.22 (2H,t,*J =*7.0 Hz), 380 (8H,m), 4.17 (2H,t,*J* =9.4 Hz).
¹³C NMR (75 Mhz, CDCl₃): δ = 10.2, 18.1, 22.6, 25.8, 27.8, 29.1, 29.1, 29.2, 29.2, 29.3, 33.0, 54.2, 58.1, 66.9, 168.5

| | | | | |
|---|---|---|---|---|
| C₁₈H₃₉NO₄Si (373,57) | kalk. | C 61,08 | H 10,52 | N 3,75 |
| | gef. | 60,88 | 10,58 | 3,80 |

MS(EL): *m/z* = 373 (M⁺, 10), 85 (100), 98 (72)
HRMS: *m/z* kalk. für C₁₉H₃₉NO₄Si 373.2648, gef. 373.2654

### 1.2 Beispiel 2

Herstellung von 2-[10-(Trimethoxysilyl)decyl]-1,3-oxazolin.

In einem Rundkolben mit Innenthermometer und Einleitungsrohr für Schutzgas wurde eine Mischung aus
3,95 g (18,9 mmol) 2-(9-Decenyl)-1,3oxazolin,
1,92 g (15,7 mmol) Trimethoxysilan,
0,18 ml (0,008 mmol) H₂PtCl₆ · aq (0,044M in Diglyme), für 15 h auf 100°C erhitzt. Die fraktionierte Vakuumdestillation des Ansatzes ergab 2,1 g (41 % d. Th.) 2-[10-(Trimethoxysilyl)decyl]-1,3-oxazolin bei Sdp. 133 - 135°C (0,1 mbar).
IR(KBR): ν = 2920, 1668, 1110, 950 cm⁻¹
¹H NMR (300 Mhz, CDCl₃): δ = 0.61 (2H,t,*J* =7.9 Hz), 1.23 (14H,m), 1.68 (2H,m), 2.23 (2H,t,*J =*7.0 Hz), 3.48 (9H,s), 3.78 (2H,t,*J* =9.4 Hz), 4.17 (2H,t,*J* =9.4 Hz)
¹³C NMR (75 Mhz, CDCl₃): δ=9.0, 22.4, 25.8, 27.8, 29.1, 29.1, 29.1, 29.3, 29.3, 32.9, 50.3, 54.2, 66.9, 168.5

| | | | | |
|---|---|---|---|---|
| C₁₆H₃₉NO₄Si (331,53) | kalk. | C 57,97 | H 10,03 | N 4,22 |
| | gef. | 58,14 | 9,82 | 4,22 |

MS (EL): *m/z* = 331 (M⁺, 12), 85 (100), 98 (92)
HRMS: *m/z* kalk. für C₁₆H₃₃NO₄Si 331.2179, gef. 331.2186.

### 1.3 Beispiel 3

Herstellung von 2-[3-(Triethoxysilyl)propyl]-1,3-oxazolin

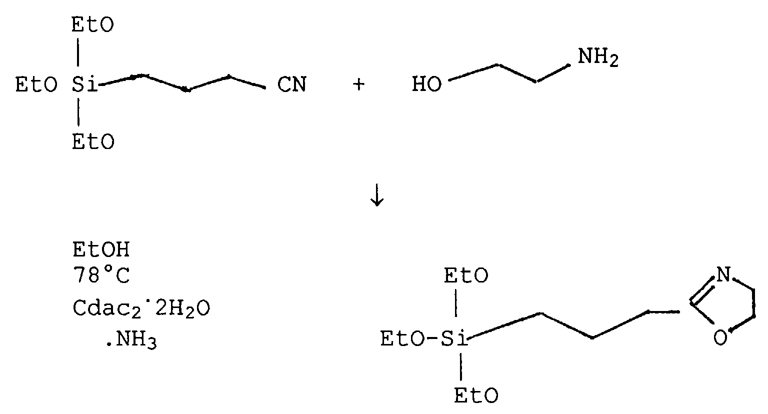

Herstellung von 2-[3-Triethoxysilyl)propyl]-1,3-oxazolin

In einem Rundkolben mit Rückflußkühler und Einleitungsrohr für Schutzgas wurde eine Mischung aus
50 ml Ethanol abs. wasserfrei,
2,5 ml (11,2 mmol) 3-Cyanopropyltriethoxysilan,
0,67 ml (11,2 mmol) 2-Aminoethanol,
0,12 g (0,22 mmol) Cadmiumacetatdihydrat für 20 h zum Rückfluß erhitzt. Das 2-[3-(Triethoxy silyl)propyl]-1,3-oxazolin entstand in 25 % Umsatz.
IR (Kbr): ν = 2920, 1668, 1110, 950 cm⁻¹
¹H-NMR: 4.15, 3.80 ppm (Oxazolin).

### 2. Modifizierung von Oberflächen

### 2.1 Beispiel 1

In einem Rundkolben mit Innenthermometer und Rückflußkühler wurde eine Suspension aus
700 ml Methanol,
70 ml Wasser (de-ionisiert)
15 ml Ammoniumhydroxid-Lösung (25 % Gew.- in Wasser),
10 g Aerosil® 200, pyrogen hergestelltes SiO₂, spez. Oberfläche 200 m²/g
3,85 g (10,3 mmol) 2-[10-Triethoxysilyl)decyl]1,3-oxazolin für 2 h auf Innentemperatur 50°C erhitzt. Das abfiltrierte SiO₂ wurde anschließend 4 h bei 30°C / Ölpumpenvakuum, dann 2 h bei 80°C / Ölpumpenvakuum getrocknet.
IR (KBr): ν = 2927, 2855, 1641 (C = N) cm⁻¹
Thermogravimetrie (25 - 700°C): 10,1 %-Gew. (48 mmol Decyloxazolin / 100 g Aerosil 200)
Elementaranalyse: 44 mmol / 100 g Aerosil 200
²⁹Si-CP-MAS-NMR: - 60 ppm T₂ - 64 ppm T₃ + T₄.

### 2.2 Beispiel 2

In einem Rührkolben mit Innenthermometer und Rückflußkühler wurde eine Suspension aus
300 ml Toluol abs. wasserfrei,
10,0 g Aerosil® 200, pyrogen hergestelltes SiO₂
11,2 g (30 mmol) 2-[10-Triethoxysilyl)decyl]-1,3-oxazolin für 2 h auf Innentemperatur 50°C erhitzt. Das abfiltrierte SiO₂ wurde anschließend 4 h bei 30°C / Ölpumpenvakuum, dann 2 h bei 80°C / Ölpumpenvakuum getrocknet.
IR (KBr): ν = 2927, 2855, 1641 (C = N) cm⁻¹
Thermogravimetrie (25 - 700°C): 4.6 %-Gew. (22 mmol Decyloxazolin / 100 g Aerosil 200)
Elementaranalyse: 21 mmol / 100 g Aerosil 200
²⁹Si-CP-MAS-NMR: 55 ppm (Standard TMS) T₁ - 59 ppm T₂.

### 2.3 Beispiel 3

Analog der Arbeitsweise in Beispiel 2 wurde mit Aminkatalysator gearbeitet:
300 ml Toluol abs. wasserfrei,
10,0 g Aerosil 200,
11,2 g (30 mmol) 2-[10-(Triethoxysilyl)decyl]-1,3-oxazolin,
1,1 ml (10 mmol) Benzylamin
für 48 h zum Rückfluß erhitzt. Das abfiltrierte SiO₂ wurde anschließend 24 h mit Toluol extrahiert, anschließend im Ölpumpenvakuum bei 60°C 5 h getrocknet.
IR (KBR): ν = 2926, 2855, 1640 (C = N) cm⁻¹
Thermogravimetrie (25 - 700°C): 6.5 %-Gew. (31 mmol Decyloxazolin / 100 g Aerosil 200)
Elementaranalyse: 30 mmol / 100 g Aerosil 200
²⁹Si-CP-MASNMR: - 59.5 ppm T₂ - 63.5 T₃ + T₄.

### 2.4 Beispiel 4

In einem Rundkolben mit Innenthermometer und Rückflußkühler wurde eine Suspension aus
700 ml Methanol,
70 ml Wasser (de-ionisiert),
15 ml Ammoniumhydroxyd-Lösung (25 %-Gew. in Wasser),
100 Glaskugeln CP 5000-00,
3,85 g (10,3 mmol) 2-[10-(Triethoxysilyl)decyl]-1,3-oxazolin für 2 h auf Innentemperatur 50°C erhitzt. Das abfiltrierte SiO₂ wurde anschließend 4 h bei 30°C / Ölpumpenvakuum, dann 2h bei 80°C/Ölpumpenvakuum getrocknet.
Thermogravimetrie (25 - 650°C): 0.20 %-Gew. (0.95 mmol Decyloxazolin / 100 g Glaskugeln).
Hersteller der Glaskugeln:
   Potters Ballotini, Kirchheim-Bollanden
Typ: CP 5000-00 unbehandelt, nicht silanisiert mittl. Dimension 5 - 10 µm, 99 % < 12 µm

### 3. Verwendung der modifizierten Materialien

3.1 Es wurden zwei Reihen mit allen drei Typen Glaskugeln untersucht. Einmal wurde der Anteil Füllstoff bei konstantem Haftvermittlergehalt (10 %-Vol) variiert, des weiteren wurde bei konstantem Füllstoffgehalt (10 %-Vol) der Anteil Haftvermittler variiert.
Die Composites wurden in einem Haake Rheomix 90 Kneter mit einer 60 ml Zweihaken Mischkammer bei 60 r.p.m. und 240°C bei einer Gesamtreaktionsdauer von sechs Minuten hergestellt. Die Komponenten wurden in variierenden vol-%igen Anteilen gemischt. Nach der Reaktion wurde das erhaltene Material zu 2 mm dicken Platten schmelzgepreßt, aus welchen Probenkörper nach DIN für Zug-Dehnungsmessungen gefräßt wurden.
Durch die kovalente Anbindung des carboxylierten PP auf oxolinfunktionalisierte Microglaskugeln wird im erhaltenen Composite die theoretisch maximal mögliche Zugspannung der nicht gefüllten Matrix erreicht. Zum Vergleich weisen die mit Octylsilan beschichteten Glaskugeln, welche sich strukturell nur durch das Fehlen des Oxazolins unterscheiden, sowie die unbehandelten Glaskugeln, wesentlich verringerte Zugspannungen auf (Tabelle bzw. Graphik 1).
Matrix Polypropylen: PPn; Shell KM 6100
Haftvermittler PP-COOH, Polybond BP Chemicals, Acrylsäure (6 %-wt.) gepfropftes PP, M_{w} = 30000 - 40000
Füllstoff Glaskugeln: Potters Ballotini CP 50000-00, d₉₉=12µm
a) unbehandelt
b) silanisiert mit Oxazolinyldecyltriethoxisilan, 0,95 mmol/100 g
c) silanisiert mit Octyltriethoxysilan, 1,0 mmol/100 g 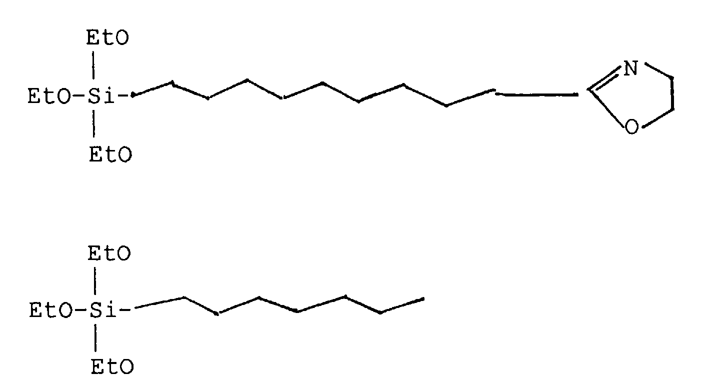
3.2 Reihe I: PPn + 10 %-Vol. PP-COOH + x %-Vol. (0, 10, 20, 30) Glas a), b), c)

| Typ | Glas %-Vol | E-Modul [Mpa] | Zugspannung [Mpa] | Reißdehnung [%] |
|---|---|---|---|---|
| | | | | |
| - | 0 | 1230 | 30,0 | 20 |
| | | | | |
| a) | 10 | 1490 | 29,0 | 10 |
| b) | 10 | 1510 | 34,0 | 9 |
| c) | 10 | 1510 | 28,1 | 38 |
| | | | | |
| a) | 20 | 1770 | 27,0 | 4 |
| b) | 20 | 1940 | 34,0 | 8 |
| c) | 20 | 1890 | 22,2 | 44 |
| | | | | |
| a) | 30 | 2490 | 25,8 | 4 |
| b) | 30 | 2440 | 33,6 | 4 |
| c) | 30 | 2261 | 18,4 | 24 |

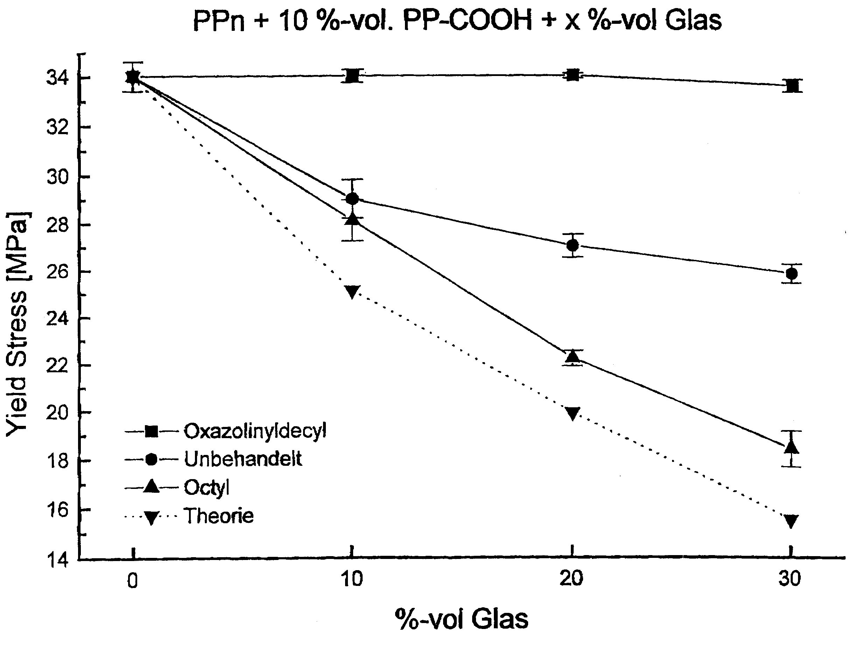

siehe Abb. 1
3.3 Reihe II: PPn + x %-Vol. (0, 1, 2, 5, 10) PP-COOH + 10 %-Vol. Glas a), b)

| Typ | PP-COOH %-Vol | E-Modul [Mpa] | Zugspannung [Mpa] | Reißdehnung [%] |
|---|---|---|---|---|
| | | | | |
| a) | 0 | 1340 | 26,7 | 380 |
| b) | 0 | 1380 | 28,2 | 60 |
| | | | | |
| a) | 1 | 1430 | 27,0 | 40 |
| b) | 1 | 1430 | 29,7 | 33 |
| | | | | |
| a) | 2 | 1440 | 27,7 | 18 |
| b) | 2 | 1530 | 30,5 | 12 |
| | | | | |
| a) | 5 | 1540 | 28,0 | 13 |
| b) | 5 | 1490 | 32,5 | 15 |
| | | | | |
| a) | 10 | 1490 | 29,0 | 10 |
| b) | 10 | 1510 | 34,0 | 9 |

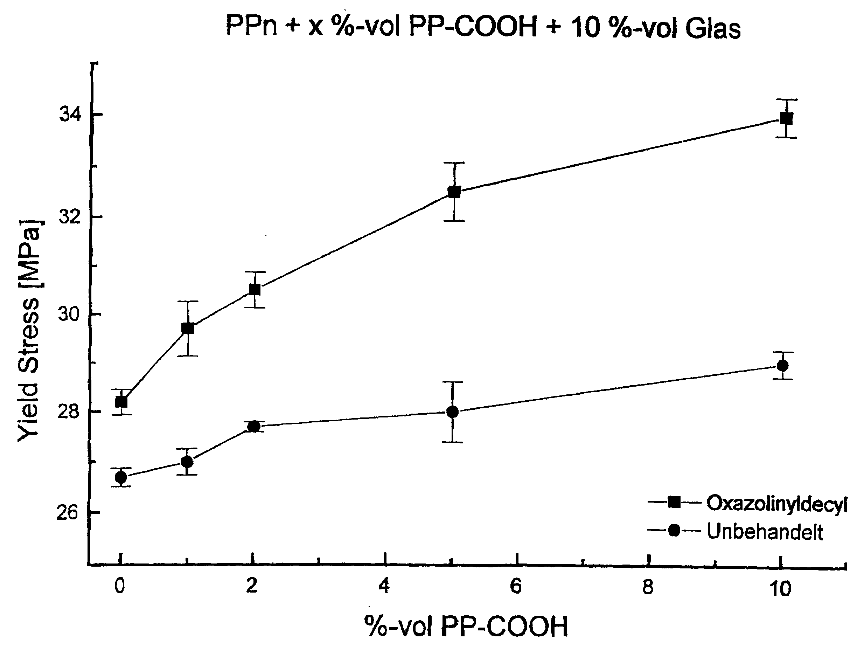

siehe Abb. 2

## Patentansprüche

1. Alkylalkoxysilyl-1,3-oxazoline der allgemeinen Formel 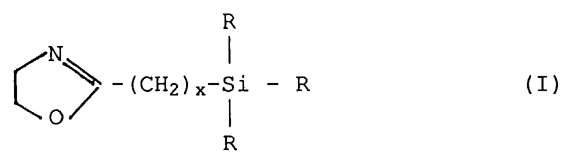 in der bedeuten
R: Alkyl mit 1 bis 6 C-Atomen, verzweigt oder unverzweigt,
Alkoxy mit 1 bis 4 C-Atomen,
Phenyl, wobei Si durch mindestens eine Alkoxygruppe substituiert ist,
x: eine ganze Zahl von 2 bis 14.

2. Verfahren zur Herstellung der Alkylalkoxysilyl-1,3-oxazoline gemäß Anspruch 1,
**dadurch gekennzeichnet,**
daß man ein 2-[Alkenyl]-1,3-oxazolin der allgemeinen Formel 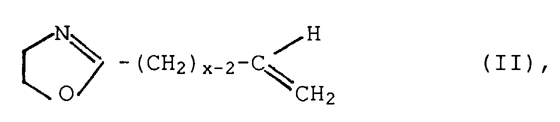 in der x die Bedeutung wie oben besitzt, in Gegenwart Pt- oder Rhodiumkatalysators mit einem Alkylalkoxysilan der allgemeinen Formel 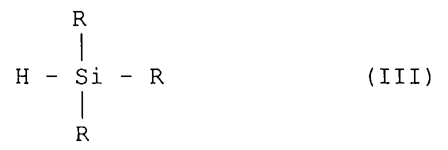 umsetzt, in der R dieselben Bedeutungen wie oben hat.

3. Verfahren zur Herstellung der Alkylalkoxysilyl-1,3-oxazoline gemäß Anspruch 1,
**dadurch gekennzeichnet,**
daß man eine Cyanosilanverbindung der allgemeinen Formel 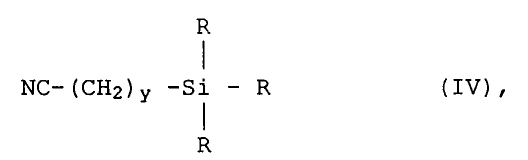 in der R die Bedeutung wie oben hat und y eine ganze Zahl von 2 bis 12 bedeutet, mit 2-Aminoethanol in Gegenwart eines als Katalysator wirkenden Cd-Salzes umsetzt.

4. Verwendung der Verbindungen gemäß Anspruch 1 zur Modifizierung von silikatischen Oberflächen.
